# EUROPÄISCHE PATENTSCHRIFT

(11) **EP 1 022 832 B1**
(45) Veröffentlichungstag und Bekanntmachung des Hinweises auf die Patenterteilung: **07.06.2006**
(21) Anmeldenummer: 99121769.6
(22) Anmeldetag: 03.11.1999
(51) Int. Cl.: H02G 3/08

(54) **Haltevorrichtung für durch Wandungen dichtend hindurchgeführte Kabel**
Holder for a cable fed in a sealed manner through a wall
Dispositif de maintien pour cable traversant un mur de manière étanche

(30) Priorität: 19.01.1999 DE 19901914
(43) Veröffentlichungstag der Anmeldung: 26.07.2000
(73) Patentinhaber: Friedrich Lütze Elektro GmbH, 71384 Weinstadt (DE)
(72) Erfinder: Kassulat, Bernd, 71394 Kernen (DE)
(74) Vertreter: Vetter, Hans

(56) Entgegenhaltungen:
- EP-A- 0 531 172
- CH-A- 688 012
- DE-A- 3 937 192
- US-A- 4 316 999

## Beschreibung

Die Erfindung betrifft eine Haltevorrichtung für durch Wandungen dichtend hindurchgeführte Kabel, mit einer mehrere Kabel-Durchgangslöcher aufweisenden, an der ebenfalls mit Kabel-Durchgangsöffnungen versehenen Wandung montierbaren Halteplatte und mit einer elastischen, im montierten Zustand zwischen der Halteplatte und der Wandung angeordneten Dichtungsplatte, die fluchtend zu den Kabel-Durchgangslöchern vorgefertigte Kabel-Durchbruchstellen aufweist.

Bei einer derartigen, beispielsweise aus der CH 688 012 bekannten Haltevorrichtung wird eine elastische Platte zwischen einer Rückhalteplatte und einer Gegenhalteplatte angeordnet, wobei diese drei Platten mittels eines Flanschgehäuses an einer Wandung fixiert werden. Nach dem dichtenden Durchstecken eines Kabels wird dieses geringfügig zurückgezogen, so daß der das Kabel umgebende Bereich der elastischen Platte in das einen geringeren Durchmesser aufweisende Durchgangsloch der Rückhalteplatte hineingezogen wird und sich dort verklemmt. Dies führt zur angestrebten Kabelzugentlastung und gleichzeitig zur Abdichtung der Kabeldurchführung.

Der Nachteil der bekannten Haltevorrichtung besteht zum einen darin, daß die Zugentlastung nur bei einem ganz bestimmten Kabeldurchmesser wirksam wird, so daß für Kabel mit unterschiedlichen Durchmessern eine sehr komplizierte Anordnung mit einer exakten Anpassung der Durchgangslöcher an die jeweiligen Kabeldurchmesser erforderlich ist. Bei einer einmal montierten Haltevorrichtung können nur die ursprünglich vorgesehenen Kabel verwendet werden. Ein weiterer Nachteil besteht darin, daß nach erfolgter Verklemmung ein Herausziehen des Kabels nach hinten nicht mehr möglich ist, zum Beispiel im Falle eines irrtümlich eingeschobenen Kabels. Schließlich ist die bekannte Haltevorrichtung durch die Vielzahl der erforderlichen Platten aufwendig und umständlich herzustellen und zu montieren, was auch Kostennachteile mit sich bringt.

Eine Aufgabe der vorliegenden Erfindung besteht darin, eine einfachere Haltevorrichtung der eingangs genannten Gattung zu schaffen, bei der in jedem Durchgangsloch Kabel mit unterschiedlichen Durchmessern eingesetzt und bei guter Abdichtung sicher gehalten werden können.

Diese Aufgabe wird erfindungsgemäß dadurch gelöst, daß die Halteplatte seitlich in die Kabel-Durchgangslöcher eingreifende elastische Haltezungen besitzt, von denen jede beim Durchstecken eines Kabels durch das entsprechende Kabel-Durchgangsloch zur Wandung hin ausgelenkt wird und sich bei Zugbeanspruchung des Kabels in der Gegenrichtung mit diesem verkrallt, wobei eine Auslenkung zur Wandung hin bleibt.

Die elastischen Haltezungen gewährleisten eine gute Zugentlastung, wobei die Auslenkung zur Wandung hin bei unterschiedlichen Kabeldurchmessern unterschiedlich ist, jedoch in jedem Falle bei Zugbeanspruchung ein Verkrallen gewährleistet wird. Da die Auslenkung zur Wandung hin bleibt, bilden die Haltezungen praktisch schräge Stützpfeiler, die einer Zugentlastung entgegenwirken. Ein weiterer Vorteil der elastischen Haltezungen besteht darin, daß diese in einfacher Weise entriegelt werden können, so daß ein Zurückziehen des jeweiligen Kabels und ein Herausziehen aus dem jeweiligen Kabel-Durchgangsloch in einfacher Weise möglich sind. Da die Entriegelung von der Vorderseite her erfolgen kann, ist dabei eine Demontage der Haltevorrichtung nicht erforderlich. Durch die erfindungsgemäßen Haltezungen können auch unterschiedliche Querschnittsformen von Kabeln sicher gehalten werden. Durch die Entkoppelung von Abdichtung und Zugentlastung wirken auf die Dichtungsplatte praktisch keine Kräfte ein, so daß eine gute Abdichtung auch bei Zugbeanspruchung gewährleistet ist. Die Herstellung und Montage kann schnell und kostengünstig erfolgen, da die Haltevorrichtung praktisch nur aus zwei Komponenten besteht, nämlich der Halteplatte und der Dichtungsplatte. Dabei kann die Halteplatte praktisch eine beliebige Gestalt und Dicke aufweisen.

Durch die in den Unteransprüchen aufgeführten Maßnahmen sind vorteilhafte Weiterbildungen und Verbesserungen der im Anspruch 1 angegebenen Haltevorrichtung möglich.

Eine besonders gute Zugentlastung und ein besonders sicherer Halt des Kabels werden dadurch gewährleistet, daß die freien Enden der Haltezungen schneidenartig ausgebildet sind oder wenigstens eine Spitze aufweisen.

Bei einer besonders einfachen, kostengünstigen Ausführung der Halteplatten sind die Haltezungen einstückig mit dieser verbunden und werden insbesondere durch jeweils zwei Schlitze in der Halteplatte gebildet.

Zur Erzielung der erforderlichen Federelastizität besitzen die Haltezungen zweckmäßigerweise eine geringere Dicke als die im wesentlichen starre Halteplatte. Dabei sind die Haltezungen vorzugsweise an der von der Dichtungsplatte wegweisenden Seite der Halteplatte mit dieser verbunden, so daß eine Auslenkung in die jeweiligen Kabel-Durchgangslöcher hinein möglich ist, ohne daß die Dichtungsplatte dadurch beeinträchtigt würde.

Die Kabeldurchbruchstellen sind in vorteilhafter Weise sacklochartig ausgebildet, so daß eine gute Einführung des jeweiligen Kabels und ein relativ leichtes Durchstechen des Bodenbereichs möglich sind. Dieser Bodenbereich legt sich dann dichtend um das Kabel herum an dieses an.

In einer besonders einfachen konstruktiven Ausgestaltung ist jedem Durchgangsloch eine Haltezunge zugeordnet. Dies eröffnet die vorteilhafte Möglichkeit, mehrere Haltezungen parallel nebeneinander anzuordnen, wobei die freien Enden jeweils abwechselnd in entgegengesetzte Richtungen weisen und in Kabel-Durchgangslöchern münden, die in zwei parallelen Reihen angeordnet sind. Dies gewährleistet eine besonders kompakte Anordnung der Kabel-Durchgangslöcher. Zur Befestigung besitzen die Halteplatte und die Dichtungsplatte vorzugsweise miteinander fluchtende Befestigungslöcher, so daß die Halteplatte mittels Schrauben an der Wandung fixiert werden kann, wobei die Dichtungsplatte dazwischen dichtend eingeklemmt wird.

Eine besonders kostengünstige Lösung besteht auch darin, daß die flexible Dichtungsplatte als Teilstück eines ablängbaren flexiblen Bands ausgebildet ist, so daß beliebig unterschiedlich lange Halteplatten auf einfache Weise durch Ablängen dieses Bands mit einer passenden Dichtungsplatte versehen werden können.

Um mehrere Halteplatten in einfacher Weise in einer exakten Aufreihung aneinanderzufügen, besitzt jede Halteplatte an gegenüberliegenden Begrenzungslinien Verzahnungselemente zum verzahnten Aneinanderreihen. Dabei sind die gegenüberliegenden Begrenzungslinien zweckmäßigerweise so ausgebildet, daß sich ein konstanter Lochabstand der Kabel-Durchgangslöcher in der Längsrichtung bei aneinandergereihten Halteplatten ergibt. Dies ermöglicht den Einsatz von abgelängten Teilstücken von einem flexiblen Band als Dichtungsplatten.

Die Halteplatte kann mit Kabel-Durchgangslöchern verschiedener Durchmesser und/oder verschiedener Gestalt versehen sein, um stark unterschiedliche Kabel halten zu können. Eine besonders gute Dichtwirkung ergibt sich bei der Verwendung von Neoprene als Material für die Dichtungsplatte.

Zum einfachen Lösen bzw. Entriegeln der Haltezungen ist in vorteilhafter Weise ein stiftartiges Werkzeug vorgesehen, mit dem lediglich die jeweilige Haltezunge nach innen gedrückt werden muß.

Ausführungsbeispiele der Erfindung sind in der Zeichnung dargestellt und in der nachfolgenden Beschreibung näher erläutert. Es zeigen:
- Fig. 1: eine Querschnittsdarstellung durch eine aus einer Halteplatte und einer Dichtungsplatte bestehenden Haltevorrichtung vor dem Einsetzen eines Kabels,
- Fig. 2: eine Draufsicht auf diese Halteplatte,
- Fig. 3: eine der Fig. 1 entsprechende Querschnittsdarstellung bei eingesetztem Kabel,
- Fig. 4: eine entsprechende Querschnittsdarstellung mit entriegelter Haltezunge,
- Fig. 5: vier aneinandergereihte und miteinander verzahnte Halteplatten in der Draufsicht als weiteres Ausführungsbeispiel der Erfindung und
- Fig. 6: ein flexibles Band, aus dem durch Ablängen flexible Dichtungsplatten geeigneter Länge hergestellt werden können.

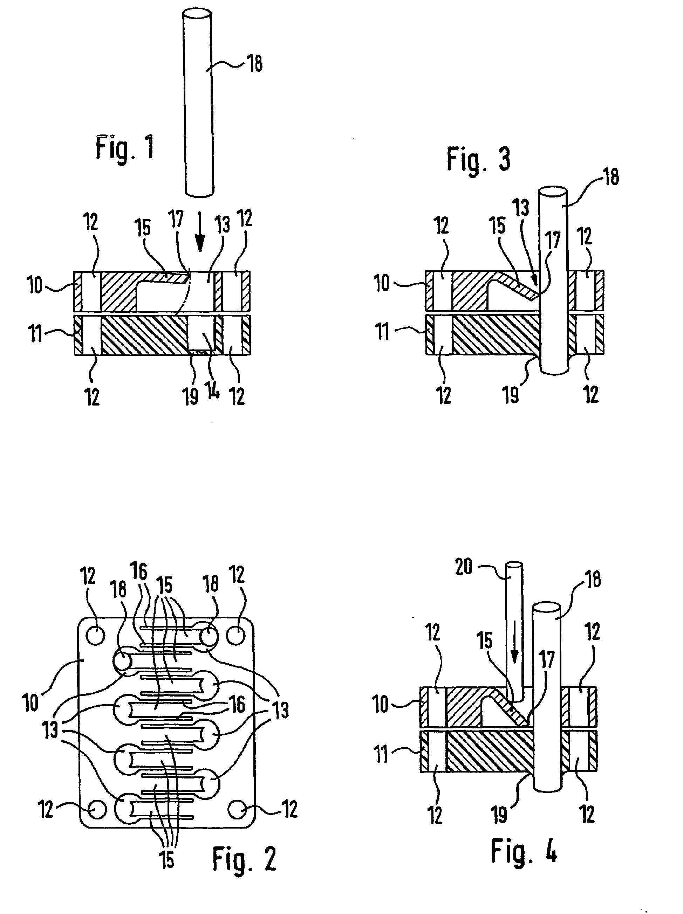

Die in den Fig. 1 bis 4 als erstes Ausführungsbeispiel dargestellte Haltevorrichtung besteht aus einer im wesentlichen starren Halteplatte 10 aus Metall oder Kunststoff udn einer Dichtungsplatte 11 aus einem elastischen, flexiblen Material, beispielsweise Neoprene, die im wesentlichen dieselbe Außenkontur besitzt. An den vier Eckbereichen besitzen die im wesentlichen rechteckförmigen Platten 10, 11 Befestigungslöcher 12, so daß die Halteplatte 10 mit Hilfe von nicht dargestellten Befestigungsschrauben so an eine nicht dargestellte Wandung angeschraubt werden kann, daß die Dichtungsplatte 11 dichtend dazwischenliegt. Diese Wandung kann beispielsweise die eines Schaltschranks, eines Gehäuses, einer Anschlußdose oder dergleichen sein, wobei die Haltevorrichtung überall dort verwendet werden kann, wo eine dichtende Durchführung von Kabeln durch eine Wandung bei gleichzeitiger Zugentlastung gefordert wird.

Die Halteplatte 10 besitzt acht Kabel-Durchgangslöcher 13, die in zwei Reihen angeordnet sind und jeweils mit Sacklöchern 14 in der Dichtungsplatte 11 fluchten. Acht Haltezungen 15 sind so einstückig mit der Halteplatte 10 verbunden, daß ihre freien Enden jeweils in die Kabel-Durchgangslöcher 13 etwas eingreifen. Diese Haltezungen 15 sind parallel nebeneinander angeordnet, wobei die freien Enden jeweils abwechselnd in entgegengesetzte Richtungen weisen und dadurch abwechselnd in ein Kabel-Durchgangsloch 13 der einen und der anderen Reihe eingreifen. Die Haltezungen 15 sind durch Einbringen entsprechender paralleler Schlitze 16 in die Halteplatte 10 gebildet. Aus Fig. 1 ist erkennbar, daß die Dicke der Haltezungen 15 wesentlich geringer als die Dicke der Halteplatte 10 ist, um die erforderliche Elastizität und Flexibilität der Haltezungen 15 zu erzielen. Die einstückige Verbindung der Haltezungen 15 mit der Halteplatte 10 erfolgt dabei an der von der Dichtungsplatte 11 wegweisenden Seite, so daß eine Auslenkung der Haltezungen 15 zur Dichtungsplatte 11 hin möglich ist, ohne diese zu beeinträchtigen.

Die freien Enden der Haltezungen 15 sind nach Art von Schneiden 17 ausgebildet, um ein besonders gutes Verkrallen mit einem Kabel 18 zu gewährleisten. Die Schneiden 17 sind dabei teilkreisartig geformt und somit an den Außenumfang eines als Rundkabel ausgebildeten Kabels 18 angepaßt. Anstelle von schneidenartigen freien Enden können diese auch eine oder mehrere Spitzen aufweisen.

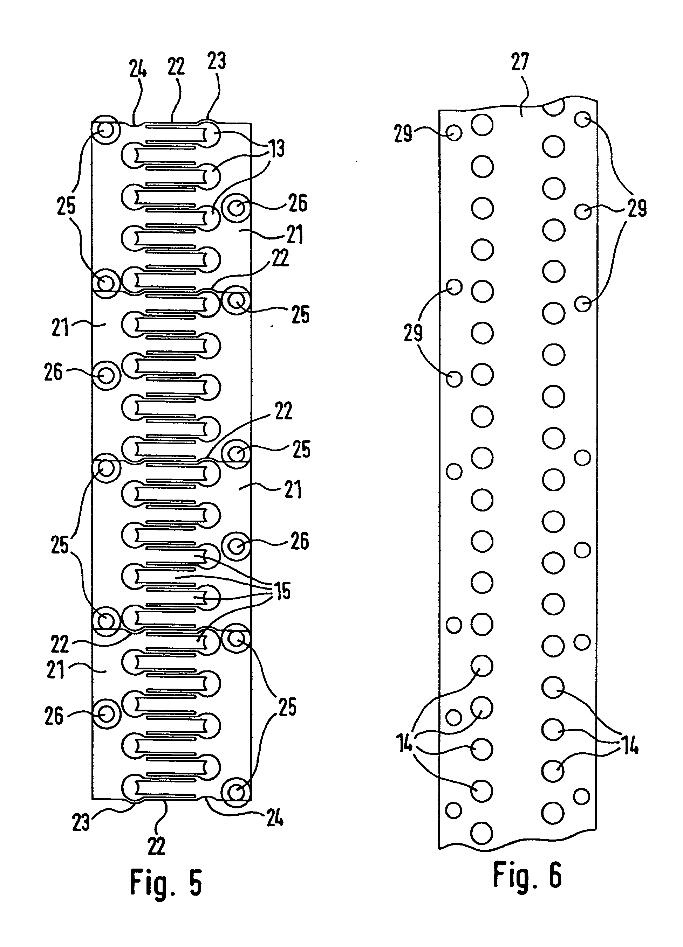

Zur Montage wird das Kabel 18 in ein Kabel-Durchgangsloch 13 eingeschoben, wodurch die in dieses Kabel-Durchgangsloch 13 eingreifende Haltezunge 15 zur Dichtungsplatte 11 hin ausgelenkt wird. Das Kabel 18 durchstößt dann den dünnen Bodenbereich 19 des Sacklochs 14, wobei sich dieser Bodenbereich 19 dann dichtend um das Kabel 18 herumlegt, wie dies in den Fig. 3 und 4 dargestellt ist. Fig. 3 zeigt dabei das Kabel 18 im eingesetzten bzw. eingeschobenen Zustand. Bei einer Zugbeanspruchung des Kabels 18 nach außen verkrallt sich die Haltezunge 15 bzw. deren schneidenartiger freier Endbereich widerhakenartig mit dem Kabel 18, so daß eine sehr gute Zugentlastung erreicht wird. Die Haltezunge 15 wirkt dabei bei einer Zugentlastung als schräge Gegenstütze.

Soll das Kabel 18 wieder herausgezogen werden, so wird die Haltezunge 15 gemäß Fig. 4 mittels eines stiftartigen Werkzeugs 20 nach innen gedrückt, so daß eine Entriegelung auftritt und das Kabel 18 mühelos herausgezogen werden kann. Durch die dünnen Bodenbereiche 19, die die Sacklöcher 14 abschließen, sind unbenutzte Kabel-Durchgangslöcher 13 automatisch dicht. Beim Einsetzen von Rundkabeln 18 mit unterschiedlichem Durchmesser werden die Haltezungen 15 je nach Durchmesser mehr oder weniger zur Dichtungsplatte 11 hin ausgelenkt, so daß beim dargestellten Ausführungsbeispiel Kabel mit Durchmessern zwischen ca. 5 - 8 mm sicher gehalten werden können. Falls auch Kabel mit Durchmessern außerhalb dieses Bereichs gehalten werden sollen, so können in einer Halteplatte 10 auch Kabel-Durchgangslöcher 13 mit unterschiedlichen Durchmessern vorgesehen sein. Zahl, Anordnung und Gestalt der Kabel-Durchgangslöcher 13 sind prinzipiell variierbar. So können beispielsweise auch Ausführungen für Flachkabel realisiert werden, wobei je nach Bedarf auch mehrere Haltezungen 15 pro Kabel-Durchgangsloch 13 vorgesehen sein können.

Die Dicke von Halteplatte 10 und Dichtungsplatte 11 kann ebenfalls in weiten Grenzen variieren. So kann beispielsweise eine gegenüber dem ersten Ausführungsbeispiel wesentlich dünnere Dichtungsplatte 11 verwendet werden.

Das in den Fig. 5 und 6 dargestellte zweite Ausführungsbeispiel entspricht weitgehend dem ersten Ausführungsbeispiel, und gleiche oder gleichwirkende Bauteile und Bereiche sind mit denselben Bezugszeichen versehen und nicht nochmals beschrieben. Gemäß Fig. 5 sind vier Halteplatten 21 aneinandergereiht, die weitgehend der Halteplatte 10 entsprechen. Im Unterchied zum ersten Ausführungsbeispiel sind die quer zur Reihenanordnung der Kabel-Durchgangslöcher 13 verlaufenden Begrenzungslinien 22 der Halteplatten 21 so mit Vorsprüngen 23 und Ausnehmungen 24 versehen, daß beim Aneinanderreihen eine Verzahnung entsteht. Zusätzlich sind die Begrenzungslinien 22 so angeordnet, daß ein gleichbleibender Lochabstand zwischen den Kabel-Durchgangslöchern 13 entsteht. Befestigungslöcher 25 sind zum Teil im Bereich der aneinanderstoßenden Begrenzungslinien 22 so linienübergreifend angeordnet, daß die nicht dargestellten entsprechenden Halteschrauben jeweils beide aneinandergrenzenden Halteplatten 21 übergreifen und fixieren. Zusätzlich sind noch Befestigungslöcher 26 in den mittleren Bereichen angeordnet.

In Fig. 6 ist ein elastisches, flexibles Band 27 dargestellt, das zwei Reihen von Sacklöchern 28 besitzt, deren Abstände zueinander und innerhalb des flexiblen Bands 27 denen der Kabel-Durchgangslöcher 13 der aneinandergereihten Halteplatten 21 entspricht. Weiterhin sind Befestigungslöcher 29 vorgesehen, die ebenfalls den Befestigungslöchern 25, 26 der aneinandergereihten Halteplatten 21 entsprechen. Durch Ablängen dieses flexiblen Bandes 27 können dann Dichtungsplatten entsprechend der Längenanordnung der aneinandergereihten Halteplatten 21 gebildet werden, wobei auch für einzelne Halteplatten 21 passende Dichtungsplatten von diesem flexiblen Band 27 abgeschnitten werden können. Auch die Dichtungsplatte 11 des ersten Ausführungsbeispiels kann beispielsweise durch Ablängen eines entsprechenden flexiblen Bands gebildet werden. Auch beim zweiten Ausführungsbeispiel sind selbstverständlich wieder entsprechende Variationen in der Gestalt, Anordnung und Anzahl der Kabel-Durchgangslöcher 13 möglich.

## Patentansprüche

1. Haltevorrichtung für durch Wandungen dichtend hindurchgeführte Kabel (18), mit einer mehrere Kabel-Durchgangslöcher (13) aufweisenden, an der ebenfalls mit Kabel-Durchgangsöffnungen (13) versehenen Wandung montierbaren Halteplatte (10) und mit einer elastischen, im montierten Zustand zwischen der Halteplatte (10) und der Wandung angeordneten Dichtungsplatte (11), die fluchtend zu den Kabel-Durchgangslöchern (13) vorgefertigte Kabel-Durchbruchstellen aufweist, **dadurch gekennzeichnet, daß** die Halteplatte (10; 21) seitlich in die Kabel-Durchgangslöcher (13) eingreifende elastische Haltezungen (15) besitzt, von denen jede beim Durchstecken eines Kabels (18) durch das entsprechende Kabel-Durchgangsloch (13) zur Wandung hin ausgelenkt wird und sich bei Zugbeanspruchung des Kabels (18) in der Gegenrichtung mit diesem verkrallt, wobei eine Auslenkung zur Wandung hin bleibt.

2. Haltevorrichtung nach Anspruch 1, **dadurch gekennzeichnet, daß** freien Enden der Haltezungen (15) schneidenartig ausgebildet sind oder wenigstens eine Spitze aufweisen.

3. Haltevorrichtung nach Anspruch 1 oder 2, **dadurch gekennzeichnet, daß** die Haltezungen (15) einstückig mit der Halteplatte (10; 21) verbunden und insbesondere durch jeweils zwei Schlitze (16) in der Halteplatte gebildet sind.

4. Haltevorrichtung nach einem der vorhergehenden Ansprüche, **dadurch gekennzeichnet, daß** die Haltezungen (15) zur Erzielung einer Federelastizität eine geringere Dicke als die im wesentlichen starre Halteplatte (10; 21) besitzen.

5. Haltevorrichtung nach Anspruch 4, **dadurch gekennzeichnet, daß** die Haltezungen (15) an der von der Dichtungsplatte (11) wegweisenden Seite der Halteplatte (10; 21) mit dieser verbunden sind.

6. Haltevorrichtung nach einem der vorhergehenden Ansprüche, **dadurch gekennzeichnet, daß** die Kabel-Durchbruchstellen (14) sacklochartig ausgebildet sind.

7. Haltevorrichtung nach einem der vorhergehenden Ansprüche, **dadurch gekennzeichnet, daß** jedem Kabel-Durchgangsloch (13) eine Haltezunge (15) zugeordnet ist.

8. Haltevorrichtung nach Anspruch 7, **dadurch gekennzeichnet, daß** mehrere Haltezungen (15) parallel nebeneinander angeordnet sind, wobei die freien Enden jeweils abwechselnd in entgegengesetzte Richtungen weisen und in Kabel-Durchgangslöchern (13) münden, die in zwei parallelen Reihen angeordnet sind.

9. Haltevorrichtung nach einem der vorhergehenden Ansprüche, **dadurch gekennzeichnet, daß** die Halteplatte (10) und die Dichtungsplatte (11) miteinander fluchtende Befestigungslöcher (12; 25, 26, 29) besitzen

10. Haltevorrichtung nach einem der vorhergehenden Ansprüche, **dadurch gekennzeichnet, daß** die flexible Dichtungsplatte (11) als Teilstück eines ablängbaren flexiblen Bands (27) ausgebildet ist.

11. Haltevorrichtung nach einem der vorhergehenden Ansprüche, **dadurch gekennzeichnet, daß** die Halteplatte (21) an gegenüberliegenden Begrenzungslinien (22) Verzahnungselemente (23, 24) zum verzahnten Aneinanderreihen mehrerer Halteplatten (21) besitzt.

12. Haltevorrichtung nach Anspruch 11, **dadurch gekennzeichnet, daß** die gegenüberliegenden Begrenzungslinien (22) so ausgebildet sind, daß sich ein konstanter Lochabstand der Kabel-Durchgangslöcher (13) in der Längsrichtung bei aneinandergereihten Halteplatten (21) ergibt.

13. Haltevorrichtung nach einem der vorhergehenden Ansprüche, **dadurch gekennzeichnet, daß** die Halteplatte mit Kabel-Durchgangslöchern verschiedener Durchmesser und/oder verschiedener Gestalt versehen ist.

14. Haltevorrichtung nach einem der vorhergehenden Ansprüche, **dadurch gekennzeichnet, daß** die Dichtungsplatte (11) aus Neoprene besteht.

15. Haltevorrichtung nach einem der vorhergehenden Ansprüche, **dadurch gekennzeichnet, daß** ein stiftartiges Werkzeug (20) zum Lösen der Haltezungen (15) von den Kabeln (18) vorgesehen ist.

## Claims

1. Retaining device for cables (18) passed through walls while forming a seal, with a retaining plate (10) featuring a plurality of cable through holes (13), which can be mounted on a wall likewise provided with cable through holes (13), and with a flexible sealing plate (11) located between the retaining plate (10) and the wall in the installed state and featuring prefabricated cable entry points in alignment with the cable through holes (13), **characterised in that** the retaining plate (10; 21) is provided with flexible retaining tabs (15) laterally projecting into the cable through holes (13), each of which is deflected towards the wall as a cable (18) is passed through the corresponding cable through hole (13) and is locked onto the cable (18) in a claw-like manner while it is subjected to tensile stress in the opposite direction while remaining deflected towards the wall.

2. Retaining device according to claim 1, **characterised in that** the free ends of the retaining tabs (15) are designed in the manner of cutting edges or have at least one point.

3. Retaining device according to claim 1 or 2, **characterised in that** the retaining tabs (15) are integral with the retaining plate (10; 21) and formed in particular by a pair of slots (16) in the retaining plate.

4. Retaining device according to any of the preceding claims, **characterised in that** the retaining tabs (15) are less thick than the substantially rigid retaining plate (10; 21) for obtaining a spring elasticity.

5. Retaining device according to claim 4, **characterised in that** the retaining tabs (15) are joined to the retaining plate (10; 21) on the side remote from the sealing plate (11).

6. Retaining device according to any of the preceding claims, **characterised in that** the cable entry points (14) are designed as blind holes.

7. Retaining device according to any of the preceding claims, **characterised in that** a retaining tab (15) is assigned to each cable through hole (13).

8. Retaining device according to claim 7, **characterised in that** several retaining tabs (15) are arranged parallel to one another, the free ends alternately pointing in opposite directions and terminating in cable through holes (13) arranged in two parallel rows.

9. Retaining device according to any of the preceding claims, **characterised in that** the retaining plate (10) and the sealing plate (11) have mounting holes (12; 25, 26. 29) in alignment with one another.

10. Retaining device according to any of the preceding claims, **characterised in that** the flexible sealing plate (11) is part of a flexible tape (27) which can be cut to length.

11. Retaining device according to any of the preceding claims, **characterised in that** the retaining plate (21) has keying elements (23, 24) on opposite boundary lines (22) for keying together a plurality of retaining plates (21).

12. Retaining device according to claim 11, **characterised in that** the opposite boundary lines (22) are designed to provide a constant hole distance for the cable through holes (13) in the longitudinal direction after the retaining plates (21) have been joined together.

13. Retaining device according to any of the preceding claims, **characterised in that** the retaining plate is provided with cable through holes of varying diameter and/or varying shape.

14. Retaining device according to any of the preceding claims, **characterised in that** the sealing plate (11) is made of neoprene.

15. Retaining device according to any of the preceding claims, **characterised in that** a pin-type tool (20) is provided to release the retaining tabs (15) from the cables (18).

## Revendications

1. Dispositif de retenue pour des câbles (18) amenés à traverser des parois de façon étanche, comprenant une plaque de retenue (10) présentant plusieurs trous de passage de câble (13) et pouvant être montée contre la paroi également munie d'ouvertures de passage de câble (13) et comprenant une plaque d'étanchéité élastique (11) disposée à l'état monté entre la plaque de retenue (10) et la paroi et présentant des points ruptibles de traversée de câble préformés en coïncidence avec les trous de passage de câble (13), **caractérisé en ce que** la plaque de retenue (10 ; 21) possède des languettes de retenue élastiques (15) s'engageant latéralement dans les trous de passage de câble (13) dont chacune, lorsque l'on fait passer un câble (18) à travers le trou de passage de câble correspondant (13), est déviée vers la paroi et, en cas de sollicitation en traction du câble (18), s'accroche à celui-ci dans la direction opposée, avec une déviation résiduelle vers la paroi.

2. Dispositif de retenue selon la revendication 1, **caractérisé en ce que** les extrémités libres des languettes de retenue (15) sont réalisées à la manière de lames ou présentent au moins une pointe.

3. Dispositif de retenue selon la revendication 1 ou 2, **caractérisé en ce que** les languettes de retenue (15) sont reliées d'une seule pièce à la plaque de retenue (10 ; 21) et sont réalisées chacune en particulier par deux fentes (16) dans la plaque de retenue.

4. Dispositif de retenue selon l'une des revendications précédentes, **caractérisé en ce que** pour obtenir une élasticité de ressort, les languettes de retenue (15) possèdent une épaisseur inférieure à la plaque de retenue (10 ; 21) pour l'essentiel rigide.

5. Dispositif de retenue selon la revendication 4, **caractérisé en ce que** sur le côté détourné de la plaque d'étanchéité (11) de la plaque de retenue (10 ; 21), les languettes de retenue (15) sont reliées à celle-ci.

6. Dispositif de retenue selon l'une des revendications précédentes, **caractérisé en ce que** les points de traversée de câble (14) sont réalisés à la manières de trous borgnes.

7. Dispositif de retenue selon l'une des revendications précédentes, **caractérisé en ce qu'**une languette de retenue (15) est affectée à chaque trou de passage de câble (13).

8. Dispositif de retenue selon la revendication 7, **caractérisé en ce que** plusieurs languettes de retenue (15) sont disposées en parallèle les unes aux autres, leurs extrémités libres étant tournées respectivement en alternance dans des directions opposées et débouchant sur des trous de passage de câble (13) qui sont disposés sur deux rangées parallèles.

9. Dispositif de retenue selon l'une des revendications précédentes, **caractérisé en ce que** la plaque de retenue (10) et la plaque d'étanchéité (11) possèdent des trous de fixation (12; 25, 26, 29) en coïncidence les uns avec les autres.

10. Dispositif de retenue selon l'une des revendications précédentes, **caractérisé en ce que** la plaque d'étanchéité flexible (11) est réalisée comme une partie d'une bande flexible à tronçonner (27).

11. Dispositif de retenue selon l'une des revendications précédentes, **caractérisé en ce que** la plaque de retenue (21) possède des éléments à denture (23, 24) sur des lignes de délimitation opposées (22) pour mettre bout à bout au moyen des dentures plusieurs plaques de retenue (21).

12. Dispositif de retenue selon la revendication 11, **caractérisé en ce que** les lignes de délimitation opposées (22) sont réalisées de telle sorte qu'il en résulte un espacement de trous constant des trous de passage de câble (13) dans la direction longitudinale lorsque des plaques de retenue (21) sont mises bout à bout.

13. Dispositif de retenue selon l'une des revendications précédentes, **caractérisé en ce que** la plaque de retenue est pourvue de trous de passage de câble de différents diamètres et/ou de différentes formes.

14. Dispositif de retenue selon l'une des revendications précédentes, **caractérisé en ce que** la plaque d'étanchéité (11) se compose de néoprène.

15. Dispositif de retenue selon l'une des revendications précédentes, **caractérisé en ce qu'**un outil de type broche (20) est prévu pour détacher les languettes de retenue (15) des câbles (18).
